# EUROPEAN PATENT APPLICATION

(11) **EP 4 560 054 A1**
(43) Date of publication of application: **28.05.2025**
(21) Application number: 23857030.3
(22) Date of filing: 14.07.2023
(51) Int. Cl.: C25D 7/00, C25D 5/12, C25D 5/50, H01B 1/02, H01B 5/02, H01B 13/00, H01R 13/03

(54) **CONDUCTIVE MATERIAL, AND METHOD FOR MANUFACTURING SAME**

(30) Priority: 25.08.2022 JP 2022134358
(71) Applicant: KABUSHIKI KAISHA KOBE SEIKO SHO (KOBE STEEL, LTD.), Hyogo 651-8585 (JP)
(72) Inventor: UEDA, Yutaro, Yamaguchi 752-0953 (JP)
(74) Representative: Müller-Boré & Partner Patentanwälte PartG mbB
(86) International application number: PCT/JP2023/026081
(87) International publication number: WO 2024/042914

(57) **Abstract**

A conductive material comprising a base material composed of copper or a copper alloy; an underlayer being one or more layers composed of one or more selected from the group consisting of Ni, Co and Fe; a Cu-Sn alloy layer; and a Sn layer in this order, wherein a part of the Cu-Sn alloy layer is exposed on a Sn layer-side surface of the conductive material, and an arithmetic mean height evaluated with a cut-off value of 25 µm is 0.03 µm or more in a 250 µm square region containing 50 area% or more of the Sn layer in the Sn layer-side surface of the conductive material.

## Description

### TECHNICAL FIELD

The present disclosure relates to a conductive material and a method for manufacturing the same.

### BACKGROUND ART

Due to increasing use and sophistication of electronic control in automobiles, the number of poles of an on-vehicle terminal has increased, and accordingly, an insertion force of the terminal has increased. For this reason, a conductive material to be used for a terminal needs to have a low dynamic friction coefficient from the viewpoint of reducing a load on an operator and preventing errors in fitting in the process of assembling an automobile. In addition, since the on-vehicle terminal may be used at a high temperature for a long time, the conductive material to be used for the terminal needs to have sufficient heat resistance.

Patent Document 1 describes, as an example of a conductive material having a low dynamic friction coefficient, a material with which the arithmetic mean roughness of the material surface is set within a prescribed range when a cut-off value is set to 0.8 mm and the material surface has an area ratio of a region where a Cu-Sn alloy layer is exposed and a region where the layer is not exposed is set within a prescribed range. Patent Document 1 also describes that an increase in contact resistance after use of the material at a high temperature for a long time is suppressed.

### CONVENTIONAL ART DOCUMENT

### PATENT DOCUMENT

Patent Document 1: JP2017-115210A

### DISCLOSURE OF THE INVENTION

### PROBLEMS TO BE SOLVED BY THE INVENTION

With recent automation of driving and electrification of automobiles, on-vehicle terminals have been further downsized. Due to the downsizing of a terminal, the spring structure is made smaller, and thus the contact pressure of the terminal lowers. Therefore, a conductive material that exhibits high conductivity even at a low contact pressure (that is, exhibits low contact resistance) is required. In the conventional technique as described in Patent Document 1, however, the contact resistance under a low contact pressure (< 2 N) has not been studied, and it has been found that there is room for further improvement.

The present disclosure has been devised in view of such a situation, and one object of the present disclosure is to provide a conductive material capable of sufficiently lowering contact resistance under a low contact pressure (< 2 N) while having a sufficiently low dynamic friction coefficient and sufficient heat resistance, and a method for manufacturing the conductive material.

### MEANS FOR SOLVING THE PROBLEMS

Aspect 1 of the present invention provides a conductive material including a base material composed of copper or a copper alloy; an underlayer being one or more layers composed of one or more selected from the group consisting of Ni, Co and Fe; a Cu-Sn alloy layer; and a Sn layer in this order,
in which a part of the Cu-Sn alloy layer is exposed on a Sn layer-side surface of the conductive material, and
an arithmetic mean height evaluated with a cutoff value of 25 µm is 0.03 µm or more in a 250 µm square region containing 50 area% or more of the Sn layer in the Sn layer-side surface of the conductive material.

Aspect 2 of the present invention provides the conductive material according to aspect 1, in which
the arithmetic mean height is 0.05 µm or more.

Aspect 3 of the present invention provides the conductive material according to aspect 1 or 2, in which
an arithmetic mean roughness in at least one direction is 0.15 µm or more and an arithmetic mean roughness in all directions is 3.0 µm or less on an underlayer-side surface of the base material.

Aspect 4 of the present invention provides a method for manufacturing a conductive material, the method including:
forming an underlayer being one or more layers composed of one or more selected from the group consisting of Ni, Co, and Fe on a base material composed of copper or a copper alloy;
forming a Cu layer and a Sn layer in this order on the underlayer, and then performing a reflow treatment to obtain a Cu-Sn alloy layer;
forming a non-glossy Sn plating layer having a plating thickness of 0.025 to 0.25 µm after the reflow treatment; and
exposing a part of the Cu-Sn alloy layer on a surface of the non-glossy Sn plating layer.

Aspect 5 of the present invention provides the manufacturing method according to aspect 4, in which
the non-glossy Sn plating layer has a plating thickness of 0.05 to 0.20 µm.

Aspect 6 of the present invention provides the manufacturing method according to aspect 4 or 5, in which
the forming the underlayer is performed by forming the underlayer on a surface of the base material roughened such that an arithmetic mean roughness in at least one direction is 0.15 µm or more and an arithmetic mean roughness in all directions is 3.0 µm or less.

### EFFECTS OF THE INVENTION

According to embodiments of the present invention, it is possible to provide a conductive material capable of sufficiently lowering contact resistance under a low contact pressure (< 2 N) while having a sufficiently low dynamic friction coefficient and sufficient heat resistance, and a method for manufacturing the conductive material.

### BRIEF DESCRIPTION OF THE DRAWINGS

[Fig. 1A] Fig. 1A is an optical microscope image of the Sn layer-side surface of the conductive material of Test No. 1.
[Fig. 1B] Fig. 1B is an optical microscope image of the Sn layer-side surface of the conductive material of Test No. 2.
[Fig. 1C] Fig. 1C is an optical microscope image of the Sn layer-side surface of the conductive material of Test No. 3.
[Fig. 1D] Fig. 1D is an optical microscope image of the Sn layer-side surface of the conductive material of Test No. 4.
[Fig. 2A] Fig. 2A is a secondary electron (SE) image of the Sn layer-side surface of the conductive material of Test No. 1 by SEM.
[Fig. 2B] Fig. 2B is a backscattered electron (BSE) image of the Sn layer-side surface of the conductive material of Test No. 1 by SEM.
[Fig. 3A] Fig. 3A is a sectional SEM image, parallel to the stacking direction of layers, of the conductive material of Test No. 1.
[Fig. 3B] Fig. 3B is a sectional SEM image, parallel to the stacking direction of layers, including a portion in which a part of the Cu-Sn alloy layer is exposed on the Sn layer-side surface in the conductive material of Test No. 4.
[Fig. 3C] Fig. 3C is a sectional SEM image, parallel to the stacking direction of layers, of a portion of the conductive material of Test No. 4 where the Cu-Sn alloy layer is not exposed on the Sn layer-side surface.
[Fig. 4] Fig. 4 is a schematic diagram of the device used for the evaluation of dynamic friction coefficient.
[Fig. 5] Fig. 5 is a schematic diagram of the device used for the evaluation of fretting wear resistance.

### MODE FOR CARRYING OUT THE INVENTION

The present inventor studied from various angles to realize a conductive material capable of sufficiently lowering the contact resistance under a low contact pressure (< 2 N) while having a sufficiently low dynamic friction coefficient and sufficient heat resistance.

Then, the present inventor has found that the dynamic friction coefficient of the conductive material can be sufficiently lowered while sufficient heat resistance is imparted to the conductive material by taking a configuration in which a base material, an underlayer, a Cu-Sn alloy layer, and a Sn layer are provided in this order and exposing a part of the Cu-Sn alloy layer having relatively high hardness on the Sn layer-side surface.

Furthermore, the present inventor has found that the contact resistance can be sufficiently lowered even under a low contact pressure (< 2 N) by setting the arithmetic mean height (hereinafter also referred to as "Sa") evaluated with the cutoff value set to a very narrow interval of 25 µm (that is, the influence of irregularities at wide intervals exceeding 25 µm such as surface irregularities of the base material is eliminated) in a 250 µm square region including 50 area% or more of the Sn layer on the Sn layer-side surface to 0.03 µm or more. This is considered to be because the contact resistance may be increased by an oxide that may be usually formed on the surface of the Sn layer, but the oxide is easily broken even at a low contact pressure due to possession of the above-described surface shape, so that the contact resistance can be reduced even at a low contact pressure.

As a method for manufacturing the conductive material, the present inventor has found that when an outermost surface Sn layer is formed, a conductive material having the above-described Sa can be obtained by forming a non-glossy Sn plating layer with a prescribed thickness unlike a conventional glossy Sn plating layer as disclosed in Patent Document 1.

As described above, it has been possible to achieve a conductive material capable of sufficiently lowering the contact resistance under a low contact pressure (< 2 N) while having a sufficiently low dynamic friction coefficient and sufficient heat resistance. Note that the above mechanism does not limit the scope of embodiments of the present invention.

Hereinafter, details of each requirement defined by embodiments of the present invention will be described.

The conductive material according to embodiments of the present invention is a conductive material comprising a base material composed of copper or a copper alloy; an underlayer being one or more layers composed of one or more selected from the group consisting of Ni, Co and Fe; a Cu-Sn alloy layer; and a Sn layer in this order, wherein a part of the Cu-Sn alloy layer is exposed on a Sn layer-side surface of the conductive material, and an arithmetic mean height evaluated with a cut-off value of 25 µm is 0.03 µm or more in a 250 µm square region containing 50 area% or more of the Sn layer in the Sn layer-side surface of the conductive material.

Owing to the configuration described above, it is possible to sufficiently lower the contact resistance under a low contact pressure (< 2 N) while having a sufficiently low dynamic friction coefficient and sufficient heat resistance. Each layer will be described in detail below.

### <Base material>

In embodiments of the present invention, the base material is made of copper or a copper alloy. As the material of the base material, for example, besides pure copper, various copper alloys such as Cu-Ni-Si-based alloys, Cu-Ni-Sn-P-based alloys, Cu-Fe-P-based alloys, Cu-Zn-based alloys, Cu-Cr-Ti-Si-based alloys, and Cu-Mg-based alloys can be used.

The shape of the base material is not particularly limited, and may be, for example, a sheet shape or a strip shape, and the base material may be processed into a shape of a terminal. The surface shape of the base material is also not particularly limited, and may be flat or uneven. In the method for manufacturing a conductive material according to embodiments of the present invention described later, from the viewpoint of being able to easily expose a part of the Cu-Sn alloy layer on the surface, it is preferable that, on the underlayer-side surface of the base material, the arithmetic mean roughness (hereinafter also referred to as "Ra ") in at least one direction is 0.15 µm or more and Ra in all directions is 3.0 µm or less when the cut-off value is set to 0.8 µm. The Ra of the underlayer-side surface of the base material can be measured on the basis of JIS B 0601:2001 using, for example, a surface roughness meter. The Ra of the underlayer-side surface of the base material can also be determined from a sectional image parallel to the stacking direction of layers of the conductive material.

The sheet thickness when the base material is in a sheet shape is not particularly limited, but may be, for example, 0.05 mm or more and 2 mm or less.

### <Underlayer>

The underlayer is one or more layers made of any one pure metal or an alloy composed of two or more selected from the group consisting of Ni, Co, and Fe. This underlayer can suppress diffusion of Cu and the alloy elements in the base material to the material surface, and can suppress an increase in contact resistance even after a long-term use at a high temperature. The diffusion of the underlayer itself to the material surface can be suppressed by a Cu-Sn alloy layer described later or the like. In addition, the formation of the underlayer improves the sulfurous acid gas corrosion resistance of the material.

The average thickness of the underlayer (when the underlayer has two layers, the average of the total thickness of the two layers) is preferably 0.1 µm or more from the viewpoint of suppressing pit defects in the underlayer and further exhibiting the effect described above. Meanwhile, to reduce costs and ensure forming workability, it is preferable to set the average thickness of the underlayer to 3.0 µm or less. The average thickness of the underlayer can be measured using, for example, a fluorescent X-ray film thickness meter.

The surface profile of the underlayer is not particularly limited, and for example, the shape of the underlayer-side surface of the base material may be reflected.

### <Cu-Sn alloy layer>

The Cu-Sn alloy layer is made of an alloy of Cu and Sn. The Cu-Sn alloy layer can be composed of, for example, only an η phase (Cu₆Sn₅) or an ε phase (Cu₃Sn) and an η phase. When the Cu-Sn alloy layer is composed of an ε phase and an η phase, the ε phase can be formed between the underlayer and the η phase, and can be in contact with the underlayer. Since the ε phase is harder than the η phase, the presence of the ε phase is preferable because this makes the Cu-Sn alloy layer hard and further reduces the friction coefficient. In addition, for example, in the case of a Ni underlayer, a (Cu, Ni)₆Sn₅ alloy layer may be formed after the reflow treatment.

The Cu-Sn alloy layer is partially exposed on the Sn layer-side surface of the conductive material according to embodiments of the present invention, and therefore the entire surface is not covered with the Sn layer. As a result, the dynamic friction coefficient of the conductive material can be sufficiently reduced. The exposure of a part of the Cu-Sn alloy layer on the Sn layer-side surface of the conductive material can be confirmed, for example, by acquiring a backscattered electron (BSE) image of the Sn layer-side surface of the conductive material using a SEM (scanning electron microscope).

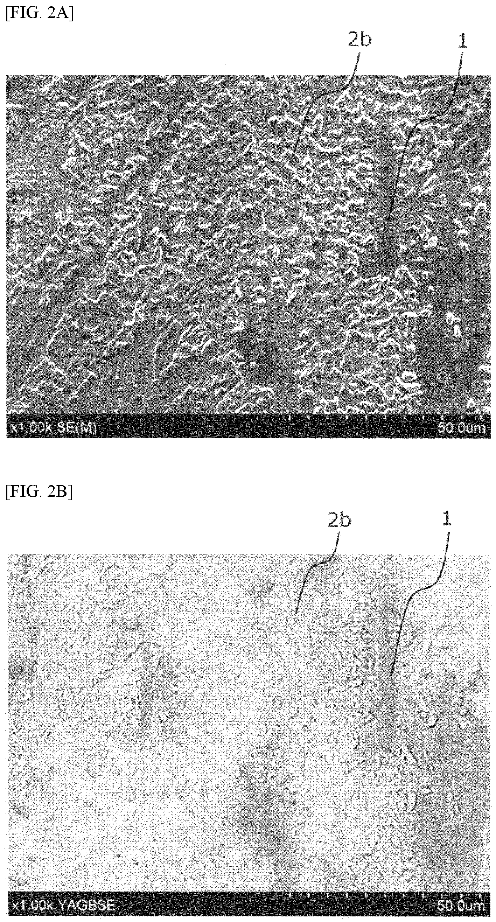

Fig. 2B shows an example of a BSE image of the conductive material (Test No. 1) according to embodiments of the present invention. In Fig. 2B, relatively dark regions caused by the Cu-Sn alloy layer 1 and relatively bright regions caused by the Sn layer (here, the non-glossy plating layer 2b) are observed. As described above, when relatively dark regions caused by the Cu-Sn alloy layer 1 are observed in the BSE image of the Sn layer-side surface of the conductive material, it can be determined that a part of the Cu-Sn alloy layer is exposed on the Sn layer-side surface of the conductive material.

The area ratio of the exposed portion of the Cu-Sn alloy layer on the Sn layer-side surface of the conductive material is preferably 10% or more. This makes it possible to further reduce the dynamic friction coefficient of the conductive material. Meanwhile, the area ratio of the exposed portion of the Cu-Sn alloy layer on the Sn layer-side surface of the conductive material is preferably 50% or less, and more preferably 40% or less. This makes it possible to further reduce the contact resistance of the conductive material. As to the area ratio of the exposed portion of the Cu-Sn alloy layer on the Sn layer-side surface of the conductive material, the BSE image described above is acquired, the BSE image obtained using image analysis software (free software ImageJ 1.49) is binarized, and the area ratio of the exposed portion of the Cu-Sn alloy layer can be calculated by image analysis.

The average thickness of the Cu-Sn alloy layer is preferably set to 3.0 µm or less to reduce costs and secure forming workability. Meanwhile, the average thickness of the Cu-Sn alloy layer is preferably set to 0.2 µm or more from the viewpoint of suppressing diffusion of the material (Ni, Co, and Fe) of the underlayer into the Sn layer. The average thickness of the Cu-Sn alloy layer can be measured using, for example, a fluorescent X-ray film thickness meter. Specifically, the value of the Sn component in the Cu-Sn alloy layer is measured using fluorescent X-rays, and the average of the obtained Sn plating thicknesses can be taken as the average thickness of the Cu-Sn alloy layer.

The Cu-Sn alloy layer may be continuous or discontinuous in a plane perpendicular to the stacking direction. In the case of being discontinuous, the Sn layer as the upper layer may be in direct contact with the lower layer (for example, the underlayer) in a part of the region where the Cu-Sn alloy layer does not exist.

### <Sn layer>

The Sn layer is disposed on the surface of the conductive material. The Cu-Sn alloy layer is partially exposed on the surface. That is, the Sn layer is discontinuous on the surface of the conductive material (in a plane perpendicular to the stacking direction).

In a 250 µm square region including 50 area% or more of the Sn layer on the Sn layer-side surface of the conductive material, the arithmetic mean height (Sa) evaluated with the cut-off value set to 25 µm (that is, the influence of irregularities at wide intervals exceeding 25 µm such as surface irregularities of the base material is eliminated) is 0.03 µm or more. As a result, the contact resistance of the conductive material can be sufficiently reduced due to, for example, the fact that the oxide film that may be formed on the surface is easily broken. The Sa is preferably 0.05 µm or more, and more preferably 0.07 µm or more. For example, when the evaluation is performed with the cut-off value set to be more than 25 µm, irregularities at wide intervals that are unlikely to break the oxide film are also reflected in the arithmetic mean height. Therefore, when the evaluation is performed with the cut-off value set to be more than 25 µm, even if the arithmetic mean height is 0.03 µm or more, the contact resistance of the conductive material may not be sufficiently reduced.

The Sa can be determined by measurement in accordance with ISO 25178 using a laser microscope. In addition, whether or not the Sn layer is contained in an amount of 50 area% or more can be confirmed, for example, from a BSE image of the Sn layer-side surface of the conductive material similarly to the method of determining the area ratio of the exposed portion of the Cu-Sn alloy layer described above.

The Sn layer preferably has, on the surface thereof, a projection satisfying H/W ≥ 0.15 where the height is H and the width of the bottom portion is W in at least one section parallel to the stacking direction. This makes it possible to further reduce the contact resistance of the conductive material. Here, the width W of the bottom portion is a width in a direction along the surface of the Sn layer, and the height H is a height in a direction perpendicular to the surface. The average value of H is preferably 0.1 µm or more. The upper limit of the average value of H is not particularly limited, but may be, for example, 1 µm or less. The average value of W is preferably 5 µm or less, and more preferably 3 µm or less. The lower limit of the average value of W is not particularly limited, but may be, for example, 0.1 µm or more. By satisfying these ranges, the contact resistance of the conductive material can be further reduced. For example, when the projection of the Sn layer is formed in a linear shape in the surface image on the Sn layer side of the conductive material, it is possible to confirm whether or not the projection has the above-described shape by preparing a sectional sample in a direction perpendicular to the linear projection and observing the vicinity of the center of the linear projection in the horizontal direction.

The conductive material according to embodiments of the present invention may include a layer other than the base material, the underlayer, the Cu-Sn alloy layer, and the Sn layer as long as the object of the conductive material is achieved.

The conductive material according to embodiments of the present invention can sufficiently lower the contact resistance under low contact pressure (< 2 N) while having a sufficiently low dynamic friction coefficient and sufficient heat resistance owing to the above configuration. Furthermore, in recent years, there has been a problem of a phenomenon (fretting wear) in which fretting occurs between contacts due to vibration of an engine of an automobile and/or vibration caused by traveling of the automobile, and the contact portions wear and contact resistance increases. Then, the conductive material according to embodiments of the present invention also has sufficient fretting wear resistance owing to the above configuration. That is, the oxide on the surface of the Sn layer is broken and peeled off by fretting, and wear may be promoted by the deposition of the peeled matter. Meanwhile, in embodiments of the present invention, since a part of the Cu-Sn alloy layer is exposed on the surface, wear of the Sn layer and (deposition of an oxide peeled off by wear) are made intermittent. Thus, the conductive material according to embodiments of the present invention can reduce wear associated with fretting.

A method for manufacturing the conductive material according to embodiments of the present invention includes: forming the underlayer on the base material; forming a Cu layer and a Sn layer on the underlayer in this order, and then performing a reflow treatment to obtain the Cu-Sn alloy layer; forming a non-glossy Sn plating layer having a plating thickness of 0.025 to 0.25 µm after the reflow treatment; and exposing a part of the Cu-Sn alloy layer on the Sn layer-side surface of the conductive material.

In the following, the respective steps are described in detail.

### <Forming underlayer on base material>

The above-described base material made of copper or a copper alloy is prepared, and an underlayer being one or more layers composed of any one or more selected from the group consisting of Ni, Co, and Fe is formed thereon. From the viewpoint of facilitating the manufacture, the underlayer is preferably composed of one layer or two layers selected from the group consisting of a Ni layer, a Co layer, and an Fe layer. The method for forming the underlayer is not particularly limited, and the underlayer may be formed by a known method such as plating. At this time, it is preferable to form the underlayer on a base material surface roughened such that the arithmetic mean roughness in at least one direction is 0.15 µm or more and the arithmetic mean roughness in all directions is 3.0 µm or less. As a result, the Cu-Sn alloy layer can be exposed on the Sn layer-side surface of the conductive material as described later. The roughening of the base material can be performed by, for example, a mechanical method such as rolling (using a work roll roughened by polishing or shot blasting), or polishing or shot blasting. In addition, a physical method such as ion etching or a chemical method such as etching or electrolytic polishing can also be used.

### <Forming Cu layer and Sn layer in this order on underlayer, and then performing reflow treatment to obtain Cu-Sn alloy layer>

The Cu layer and the Sn layer may be formed by a known method such as plating. After the Cu layer and the Sn layer are formed in this order, a reflow treatment is performed, so that Cu of the Cu layer and Sn of the Sn layer interdiffuse and a Cu-Sn alloy layer is formed. At this time, the Cu layer may entirely disappear or partially remain between the Cu-Sn alloy layer and the underlayer. Similarly, the Sn layer may also entirely disappear or partially remain. When ts/tc = 2 where ts denotes the thickness of the Sn plating layer before the reflow treatment and tc denotes the thickness of the Cu plating layer, both the Cu layer and the Sn layer are likely to entirely disappear. In addition, in the case of ts/tc < 2, the Cu layer tends to remain, and in the case of ts/tc > 2, the Sn layer tends to remain (the Sn layer remaining is herein sometimes referred to as a "residual Sn layer"). In the case of ts/tc > 2, only an η phase may be formed in an equilibrium state, but an ε phase, which is a non-equilibrium phase, may also be formed depending on reflow treatment conditions.

It is preferable that ts and tc be set such that tc is 0.1 to 1.5 µm and ts is 0.35 to 3.15 µm while ts/tc > 2. Thereby, the Cu-Sn alloy layer can be adjusted to have a preferable average thickness (0.2 to 3.0 µm) while forming the ε phase. The reflow treatment condition is preferably from the melting point of the Sn plating layer to 600°C for 3 to 30 seconds.

Here, when the underlayer is formed on the roughened base material, the underlayer and the Cu-Sn alloy layer may also have irregularities reflecting the shapes thereof. In addition, when the Sn layer partially remains even after the reflow treatment, due to the fact that the molten Sn flows into depressions at the time of reflow, the remaining Sn layer may be unevenly distributed at the location corresponding to depressions of the roughened base material. In other words, the layer configuration at the location corresponding to the projections of the roughened base material may be base material/underlayer/Cu-Sn alloy layer, and the layer configuration at the location corresponding to the depressions of the roughened base material may be base material/underlayer/Cu-Sn alloy layer/residual Sn layer.

### <Forming non-glossy Sn plating layer having a plating thickness of 0.025 to 0.25 µm after reflow treatment>

By forming a non-glossy Sn plating layer such that the plating thickness is 0.025 to 0.25 µm, a Sn layer having fine projections is obtained, and in a 250 µm square region including 50 area% or more of the Sn layer, the arithmetic mean height evaluated with a cut-off value set to 25 µm can be adjusted to 0.03 µm or more. Here, the non-glossy Sn plating layer is a Sn plating layer formed using a plating bath free of an additive such as a brightener for refining crystal grains, and the plating bath is composed of, for example, SnSO₄ and H₂SO₄. It is preferable to form a non-glossy Sn plating layer having a plating thickness of 0.05 to 0.20 µm. As a result, in a 250 µm square region containing 50 area% or more of the Sn layer, the arithmetic mean height evaluated with a cut-off value of 25 µm can be adjusted to 0.05 µm or more. More preferably, the non-glossy Sn plating layer is formed such that the plating thickness is 0.07 to 0.15 µm. As a result, in a 250 µm square region containing 50 area% or more of the Sn layer, the arithmetic mean height evaluated with a cut-off value of 25 µm can be adjusted to 0.07 µm or more.

Here, when an underlayer is formed on the roughened base material, the non-glossy Sn plating layer may grow on a residual Sn layer that may be present at a location corresponding to the depressions of the roughened base material. In other words, the layer configuration at the location corresponding to the projections of the roughened base material may be base material/underlayer/Cu-Sn alloy layer, and the layer configuration at the location corresponding to the depressions of the roughened base material may be base material/underlayer/Cu-Sn alloy layer/Sn layer (namely, the residual Sn layer + the non-glossy Sn plating layer).

### <Exposing a part of Cu-Sn alloy layer on Sn layer-side surface of conductive material>

As a method for exposing a part of the Cu-Sn alloy layer on the Sn layer-side surface of the conductive material, various methods can be used. For example, by forming an underlayer on the roughened base material, a part of the Cu-Sn alloy layer can be exposed on the Sn layer-side surface of the conductive material at the location corresponding to the projections of the roughened base material. Even when the underlayer is formed on a flat base material, a part of the Cu-Sn alloy layer can be exposed by roughening the underlayer in the same manner as the base material. In addition, for example, as in JP 2013-174006 A, it is also possible to provide a Cu-Sn alloy layer having a steep shape by adjusting the element of the underlayer and the reflow treatment. Further, by forming the base material/the underlayer/the Cu-Sn alloy layer/the Sn layer and then mechanically removing a part of the Sn layer, it is possible to expose a part of the Cu-Sn alloy layer.

The method for manufacturing the conductive material according to embodiments of the present invention may include other steps as long as the object of the method is achieved.

### Examples

In the following, embodiments of the present invention will be described more specifically with reference to Examples. The embodiments of the present invention are not limited by the following Examples, and can be implemented with appropriate modifications as long as the modifications may be consistent with the above-described and later-described gist, and all of them are included in the scope of the embodiments of the present invention.

### [Example 1]

As a base material, a copper alloy sheet (Cu-Ni-Sn-P-based) having a sheet thickness of 0.25 mm and rolled with a roughening roll was used. The arithmetic mean roughness Ra of the base material rolled with the roughening roll was 0.48 µm in one direction and 0.49 µm in all directions. The surface roughness (arithmetic mean roughness Ra) of the base material was measured on the basis of JIS B 0601:2001 using a contact-type surface roughness meter (TOKYO SEIMITSU CO., LTD.; SURFCOM 1400). The surface roughness measurement conditions were set as follows: a cut-off value of 0.8 mm; a reference length of 0.8 mm; an evaluation length of 4.0 mm; a measurement speed of 0.3 mm/s; and a stylus tip radius of 5 µmR. The surface roughness measurement conditions were set to a direction perpendicular to the rolling direction (which may be a direction in which the surface roughness is calculated to be the largest).

Next, as an underlayer, a Ni plating layer was formed on the roughened surface of the base material by a known method so as to have an average thickness of 0.3 µm. Specifically, as a Ni plating solution before a reflow treatment, a solution described in JP 2004-68026 A was used, and the plating conditions were a current density of 5 A/dm² and a bath temperature of 60°C.

Further, a Cu plating layer and a Sn plating layer were formed in this order on the underlayer by a known method. Here, the thickness (tc) of the Cu plating layer and the thickness (ts) of the Sn plating layer before the reflow treatment were set to tc: 0.15 µm and ts: 0.9 µm so that the Cu-Sn alloy layer had a preferable average thickness (0.2 to 3.0 µm) while forming an ε phase. Specifically, as the Cu plating solution and the Sn plating solution, those described in JP 2004-68026 A were used, and the plating conditions were set to a current density of 3.5 A/dm² and a bath temperature of 35°C for Cu plating, and a current density of 3.0 A/dm² and a bath temperature of 35°C for Sn plating.

Thereafter, a reflow treatment was performed under the condition of 232°C or higher (actual temperature), at which Sn was dissolved.

After the reflow treatment, a non-glossy Sn plating layer was formed to afford a conductive material of Test No. 1. Specifically, the non-glossy Sn plating layer was formed by making-up a plating solution containing SnSO₄ (80 g/L) and H₂SO₄ (80 g/L), and energizing at a current density of 3 A/dm² for 2 to 8 seconds. Here, the average Sn layer thickness before and after non-glossy Sn plating was measured for the conductive material of Test No. 1 with a fluorescent X-ray film thickness meter, and the increase in thickness was taken as the average thickness of the non-glossy Sn plating layer, and the average thickness was 0.10 µm.

Changing the thickness of the non-glossy Sn plating layer from the conductive material of Test No. 1, Test No. 2 (non-glossy Sn plating layer: 0.05 µm), Test No. 3 (non-glossy Sn plating layer: 0.025 µm), and Test No. 4 (no non-glossy Sn plating layer) were prepared. In addition, a conductive material of Test No. 5 was prepared by changing, from Test No. 1, the base material to a material obtained by rolling a 0.20 mm thick copper alloy sheet (Cu-Ni-Sn-based) with a flat roll, and failing to form the underlayer. Further, a conductive material of Test No. 6 was prepared by changing, from Test No. 1, the non-glossy Sn plating layer to a glossy Sn plating layer. The glossy Sn plating layer was formed by making-up a plating solution containing a brightener (35 g/L) in addition to SnSO₄ (80 g/L) and H₂SO₄ (80 g/L), and energizing at a current density of 3 A/dm² for 2 to 8 seconds.

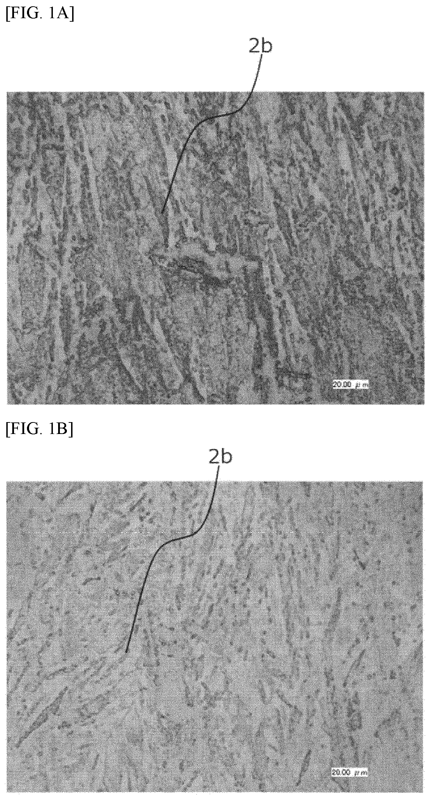

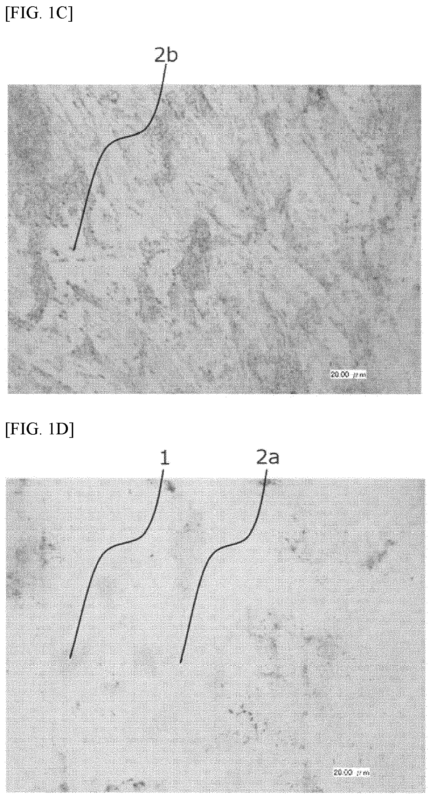

The Sn layer-side surfaces of the conductive materials of Test Nos. 1 to 6 were observed using an optical microscope. For example, Figs. 1A to 1C show optical microscope images of the conductive materials of Test Nos. 1 to 3, in which a non-glossy Sn plating layer was formed, and Fig. 1D shows an optical microscope image of the conductive material with no non-glossy Sn plating layer of Test No. 4. As shown in Fig. 1D, it can be seen that the conductive material of Test No. 4 has a flat surface due to the absence of a non-glossy Sn plating layer. In Fig. 1D, relatively dark regions are the Cu-Sn alloy layer 1, and relatively bright regions are the residual Sn layer 2a. As compared with the conductive material of Test No. 4 in Fig. 1D, the conductive materials of Test Nos. 1 to 3 in Figs. 1A to 1C each have a non-glossy Sn plating layer 2b shown in a darker region, and it is found that the surface roughness is large.

The Sn layer-side surfaces of the conductive materials of Test Nos. 1 to 6 were observed using SEM. For example, Fig. 2A shows a secondary electron (SE) image of the Sn layer-side surface of the conductive material of Test No. 1, and Fig. 2B shows a backscattered electron (BSE) image thereof. From the SE image of Fig. 2A, it can be seen that the conductive material has at least a non-glossy Sn plating layer 2b having fine projections and a Cu-Sn alloy layer 1 that is flat are provided on the Sn layer-side surface. It can be more clearly seen from the BSE image of Fig. 2B that a part of the Cu-Sn alloy layer 1 (relatively dark regions) is exposed on the Sn layer-side surface of the conductive material. Similarly in each of Test Nos. 2 to 4 and 6, it was confirmed that a part of the Cu-Sn alloy layer 1 was exposed on the Sn layer-side surface of the conductive material, but in Test No. 5, the exposure of the Cu-Sn alloy layer 1 was not confirmed. This is considered to be because the method for manufacturing the conductive material of Test No. 5 did not include a means for exposing a part of the Cu-Sn alloy layer 1, such as roughening the base material, unlike Test Nos. 1 to 4 and 6.

In addition, the Sn layer-side surfaces of the conductive materials of Test Nos. 1 to 6 were each entirely observed using SEM, and it was confirmed that the area ratio of the Sn layer was entirely (that is, in any 250 µm square region) 50 area% or more.

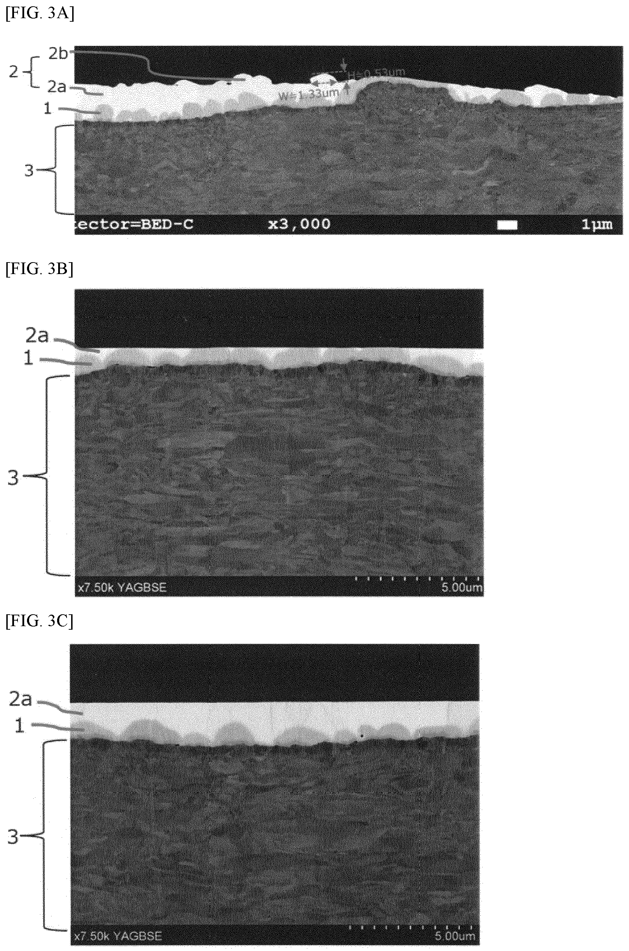

A section parallel to the stacking direction of layers of each of the conductive materials of Test Nos. 1 to 6 was observed using an SEM. For example, Fig. 3A shows a sectional SEM image of the conductive material of Test No. 1, Fig. 3B shows a sectional SEM image of a portion where a part of the Cu-Sn alloy layer 1 is exposed on the surface of the conductive material of Test No. 4, and Fig. 3C shows a sectional SEM image of a portion where the Cu-Sn alloy layer 1 is not exposed on the surface of the conductive material of Test No. 4. As shown in Figs. 3B and 3C, it can be seen that the conductive material of Test No. 4 has the Sn layer-side surface composed by the Cu-Sn alloy layer 1 and the residual Sn layer 2a, or by the residual Sn layer 2a, and the surface is flat. Meanwhile, as shown in Fig. 3A, it can be seen that the conductive material of Test No. 1 has a non-glossy Sn plating layer 2b on the surface, and forms projections having H/W ≥ 0.15 where H is the height and W is the width of the bottom (for example, in Fig. 3A, H (≈ 0.53) and W (≈ 1.33) of one projection are written, and it can be seen that the projection has H/W ≈ 0.40). It can be seen from Fig. 3A that the projections caused by the non-glossy Sn plating layer 2b have grown not on the Cu-Sn alloy layer 1 but on the residual Sn layer 2a. In addition, in Figs. 3A to 3C, the underlayer 3 is confirmed under the Cu-Sn alloy layer 1. In at least the conductive material of Test No. 1, the average value of H was within a range of 0.1 to 1 µm, and the average value of W was within a range of 0.1 to 3 µm.

The conductive materials of Test Nos. 1 to 6 were further evaluated as follows.

### <Evaluation of Arithmetic Surface Height (Sa)>

The Sa of the Sn layer-side surfaces of the conductive materials of Test Nos. 1 to 6 was measured on the basis of ISO 25178 using a laser microscope (Olympus Corporation; OLS-4100). As the surface roughness measurement conditions, the cut-off value was set to 25 µm, and a 250 µm square was defined as an evaluation area.

### <Evaluation of contact resistance>

The contact resistance of the conductive materials of Test Nos. 1 to 6 was evaluated using an electrical contact simulator (manufactured by Yamasaki-Seiki Co., Ltd.). In the device, the contact resistance measurement probe was a gold wire, but in the present test, a probe material (Cu-Ni-based base material (0.2 mm)/Cu-Sn alloy layer (0.3 µm)/Sn layer (0.7 µm)) was separately prepared, a jig for attaching a female specimen, which was a hemispherical processed material (outer diameter: 0.55 mm), was made, and the female specimen was used as a contact resistance measurement probe so as to be able to come into contact with the Sn layer-side surface of a male specimen, which was a sheet material cut out from each conductive material. Then, measurement was performed three times by a four-terminal method under the conditions of a release voltage of 20 mV, a current of 10 mA, and a load of 1 N, and an average value of the measurements was taken as a contact resistance value. In addition, the male-side specimen was heated at 160°C for 120 hours in the air, and the contact resistance before and after heating was measured.

The evaluation criteria for the initial contact resistance were AA (excellent): 2.3 mΩ or less, A (superior): 2.4 to 6.3 mΩ, B (sufficient): 6.4~6.8 mΩ, and C (insufficient): 6.9 mΩ or more, and those for the contact resistance after heating were AA (excellent): 2.9 mΩ or less, A (superior): 3.0 to 6.9 mΩ, B (sufficient): 7.0~9.9 mΩ, and C (insufficient): 10.0 mΩ or more.

### <Evaluation of dynamic friction coefficient>

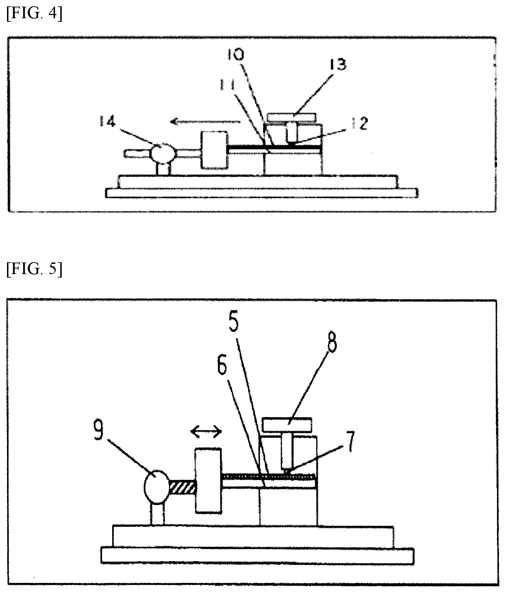

Imitating the shape of an indent part of an electric contact in a mating-type connection component, the dynamic friction coefficient of the conductive materials of Test Nos..1 to 6 was evaluated using the device shown in Fig. 4. As shown in Fig. 4, a male specimen 10 of a sheet material cut out from each conductive material was fixed to a horizontal table 11, and a female specimen 12 of a hemispherical processed material (outer diameter: 0.55 mm) of the above-described probe material was placed thereon, and the Sn layer sides of the specimens were brought into contact with each other. Subsequently, a load of 1.0 N (weight 13) was applied to the female specimen 12 to press the male specimen 10. Using a horizontal load tester (Aikoh Engineering Co., Ltd.; Model-2152), the male specimen 10 was slid once in the horizontal direction and the maximum friction force (unit: N) was measured. The sliding distance was set to 5 mm, and the sliding speed was set to 80 mm/min. In Fig. 4, reference numeral 14 denotes a load cell, an arrow indicates a sliding direction, and in both of the male specimen 10 and the female specimen 12, the direction perpendicular to the rolling direction is a direction parallel to the sliding direction. Where the normal force (load) is P (= 1.0 N) and the maximum frictional force is F, the dynamic friction coefficient µ' is expressed by µ' = F/P. For each conductive material, a measurement test was performed four times, and an average value of dynamic friction coefficients was calculated, and taken as the dynamic friction coefficient of the conductive material. The evaluation criteria of the dynamic friction coefficient were AA (excellent): 0.19 or less, A (superior): 0.20 to 0.44, B (sufficient): 0.45 to 0.59, and C (insufficient): 0.60 or more.

### <Evaluation of fretting wear resistance>

The fretting wear resistance was evaluated by imitating the shape of the indent part of an electrical contact in the mating-type connection component and using a sliding tester as shown in Fig. 5. First, a male specimen 5 of a sheet material cut out from each conductive material was fixed to a horizontal table 6, and a female specimen 7 of a hemispherical processed material (outer diameter: 0.55 mm) of the above-described probe material was placed thereon, and the Sn layer sides of the specimens were brought into contact with each other. A load of 1.0 N (weight 8) was applied to the female specimen 7 to press the male specimen 5, a constant current of 10 mA was applied between the male specimen 5 and the female specimen 8, the male specimen 5 was slid in the horizontal direction using a stepping motor 9, and an initial peak value of contact resistance was measured. For each conductive material, a measurement test was performed three times and an average value of the measurements was calculated, and the average value was taken as the contact resistance of each conductive material. The sliding distance was set to 50 µm, and the sliding frequency was set to 1 Hz. The arrow in the drawing indicates a sliding direction. The evaluation criteria of the fretting wear resistance (initial peak value of contact resistance) were AA (excellent): 2.3 mΩ or less, A (superior): 2.4 to 6.3 mΩ, B (sufficient): 6.4 to 6.8 mΩ, and C (insufficient): 6.9 mΩ or more.

The results of the evaluations described above are summarized in Table 1.

**[Table 1]**

| Test No. | Layer configuration | Presence or absence of underlayer | Presence or absence of exposure of Cu-Sn alloy layer | Sa (um) | Evaluation results | | | | | | | |
|---|---|---|---|---|---|---|---|---|---|---|---|---|
| | | | | | Initial contact resistance | | Contact resistance after heating | | Dynamic friction coefficient | | Fretting wear resistance | |
| | | | | | (mΩ) | Determination | (mΩ) | Determination | (-) | Determination | (mΩ) | Determination |
| 1 | Cu-Ni-Sn-P/Ni /Cu-Sn/Sn | Present | Present | 0.10 | 2.3 | AA | 2.1 | AA | 0.42 | A | 4.9 | A |
| 2 | Cu-Ni-Sn-P/Ni /Cu-Sn/Sn | Present | Present | 0.06 | 2.4 | A | 3.3 | A | 0.34 | A | 2.7 | A |
| 3 | Cu-Ni-Sn-P/Ni /Cu-Sn/Sn | Present | Present | 0.03 | 6.3 | A | 9.9 | B | 0.3 | A | 2.5 | A |
| 4 | Cu-Ni-Sn-P/Ni /Cu-Sn/Sn | Present | Present | 0.02 | 7.1 | C | 7.8 | B | 0.28 | A | 3.5 | A |
| 5 | Cu-Ni-Sn/Cu-Sn/Sn | Absent | Absent | 0.10 | 1.8 | AA | 83.3 | C | 0.67 | C | 2.8 | A |
| 6 | Cu-Ni-Sn-P/Ni /Cu-Sn/Sn | Present | Present | < 0.03 | 6.9 | C | 16.9 | C | 0.33 | A | 2.9 | A |

From the results in Table 1, the following discussion is conceivable. The conductive materials of Test Nos..1 to 3 all satisfied the requirements specified in the embodiment of the present invention, had sufficiently low dynamic friction coefficients (0.59 or less), had sufficient heat resistance (contact resistance after heating: 9.9 mΩ or less), had sufficiently low contact resistance under low contact pressure (< 2 N) (initial contact resistance: 6.8 mΩ or less), and further had sufficient fretting wear resistance (initial peak value of contact resistance: 6.8 mΩ or less). In addition, since Test Nos. 1 and 2 satisfied Sa ≥ 0.05, which is a preferable requirement, the contact resistance can be further reduced, and specifically, both the initial contact resistance and the contact resistance after heating were superior. Test No. 1 satisfied Sa ≥ 0.07, which is a more preferable requirement, and thus the contact resistance could be further reduced, and specifically, both the initial contact resistance and the contact resistance after heating were excellent.

Meanwhile, none of the conductive materials of Test Nos..4 to 6 satisfied the requirements prescribed in the embodiment of the present invention, and the initial contact resistance, the contact resistance after heating, or the dynamic friction coefficient was insufficient.

In the conductive material of Test No. 4, no non-glossy Sn plating layer was formed, Sa was less than 0.03 µm, and the initial contact resistance was insufficient.

In the conductive material of Test No. 5, no underlayer was formed, and the contact resistance after heating was insufficient. Furthermore, the Cu-Sn alloy layer was not exposed on the Sn layer-side surface, and the dynamic friction coefficient was also insufficient.

In the conductive material of Test No. 6, a glossy Sn plating layer was formed instead of the non-glossy Sn plating layer, the Sa was less than 0.03 µm, the initial contact resistance was insufficient, and probably because of the influence thereof, the contact resistance after heating was also insufficient.

This application claims priority based on Japanese Patent Application No. 2022-134358 filed on August 25, 2022. Japanese Patent Application No. 2022-134358 is incorporated herein by reference.

### EXPLANATION OF REFERENCES

- 1: Cu-Sn alloy layer
- 2: Sn layer
- 2a: Residual Sn layer
- 2b: Non-glossy Sn plating layer
- 3: Underlayer
- 5, 10: Male specimen
- 6, 11: Horizontal table
- 7, 12: Female specimen
- 8, 13: Weight
- 9: Stepping motor
- 14: Load cell

## Claims

1. A conductive material comprising: a base material composed of copper or a copper alloy; an underlayer being one or more layers composed of one or more selected from the group consisting of Ni, Co and Fe; a Cu-Sn alloy layer; and a Sn layer in this order,
wherein a part of the Cu-Sn alloy layer is exposed on a Sn layer-side surface of the conductive material, and
an arithmetic mean height evaluated with a cut-off value of 25 µm is 0.03 µm or more in a 250 µm square region containing 50 area% or more of the Sn layer in the Sn layer-side surface of the conductive material.

2. The conductive material according to claim 1, wherein the arithmetic mean height is 0.05 µm or more.

3. The conductive material according to claim 1 or 2, wherein an arithmetic mean roughness in at least one direction is 0.15 µm or more and an arithmetic mean roughness in all directions is 3.0 µm or less on an underlayer-side surface of the base material.

4. A method for manufacturing a conductive material, the method comprising:
forming an underlayer being one or more layers composed of one or more selected from the group consisting of Ni, Co, and Fe on a base material composed of copper or a copper alloy;
forming a Cu layer and a Sn layer in this order on the underlayer, and then performing a reflow treatment to obtain a Cu-Sn alloy layer;
forming a non-glossy Sn plating layer having a plating thickness of 0.025 to 0.25 µm after the reflow treatment; and
exposing a part of the Cu-Sn alloy layer on a surface of the non-glossy Sn plating layer.

5. The manufacturing method according to claim 4, wherein the non-glossy Sn plating layer has a plating thickness of 0.05 to 0.20 µm.

6. The manufacturing method according to claim 4 or 5, wherein the forming the underlayer is performed by forming the underlayer on a surface of the base material roughened such that an arithmetic mean roughness in at least one direction is 0.15 µm or more and an arithmetic mean roughness in all directions is 3.0 µm or less.
